# EUROPÄISCHE PATENTSCHRIFT

(11) **EP 2 846 067 B1**
(45) Veröffentlichungstag und Bekanntmachung des Hinweises auf die Patenterteilung: **11.10.2017**
(21) Anmeldenummer: 14179514.6
(22) Anmeldetag: 01.08.2014
(51) Int. Cl.: F16J 15/32

(54) **Dichtungsanordnung in einer axialen Strömungsmaschine**
Seal assembly in an axial turbo-engine
Système d'étanchéification dans une turbomachine axiale

(30) Priorität: 04.09.2013 DE 102013217581
(43) Veröffentlichungstag der Anmeldung: 11.03.2015
(73) Patentinhaber: MTU Aero Engines AG, 80995 München (DE)
(72) Erfinder: Stiehler, Frank, 04924 Bad Liebenwerda (DE)

(56) Entgegenhaltungen:
- EP-A2- 1 308 655
- DE-A1- 3 502 799
- DE-A1- 4 441 474
- DE-B3-102013 213 386
- US-A1- 2004 018 085
- US-B1- 6 173 962

## Beschreibung

Die Arbeiten, die zu dieser Erfindung geführt haben, wurden gemäß der Finanzhilfevereinbarung Nr. CSJU-GAM-SAGE-2008-001 im Zuge des Siebten Rahmenprogramms der Europäischen Union (*FP7*/*2007-2013*) für Clean Sky Joint Technology Initiative gefördert.

Die vorliegende Erfindung betrifft eine Dichtungsanordnung in einer axialen Strömungsmaschine zwischen einerseits einem Rotor und andererseits einem Stator und/oder einem Gehäuse gemäß dem Oberbegriff des Anspruchs 1.

In Strömungsmaschinen, insbesondere in axialen Strömungsmaschinen, werden unterschiedliche Dichtungen, Dichtungssysteme und Dichtungsanordnungen eingesetzt. Anwendungsbeispiele in Strömungsmaschinen sind Labyrinthdichtungen zwischen rotierenden und statischen Teilen, Lagerdichtungen oder statische Dichtungen. Dichtungen können für verschiedene Ziele eingesetzt werden, beispielsweise zur Leckagereduktion bei Verdichtern mit Bereichen unterschiedlicher Druckniveaus, zur Wirkungsgradsteigerung oder zur Bauraumoptimierung bezüglich Baugröße und Baugewicht.

Eine Dichtungsanordnung gemäß dem Oberbegriff des Anspruchs 1 ist aus der EP 1 308 655 A2 bekannt. Weitere Dichtungsanordnungen mit Bürstendichtungen sind aus der DE 10 2013 213 386 B3, der US 2004/0018085 A1 und der US 6,173,962 B1 bekannt. Eine Schmutz-/Staubschutzdichtung, die beispielsweise bei PKWs, Schleppern oder Baumaschinen zum Einsatz kommen kann, wird in der DE 44 41 474 A1 beschrieben. Aus der DE 35 02 799 A1 ist eine Wellendichtung mit einem Dichtring bekannt. Der Dichtring ist in einer Hülse angeordnet. Die Hülse weist gegenüber einem Gehäuse ein radiales Spiel auf, so dass vom Dichtring eine Radialbewegung der Welle auf die Hülse übertragen werden kann, ohne dass eine radiale Berührung zwischen der Hülse und dem Gehäuse erfolgt.

Eine Aufgabe der vorliegenden Erfindung ist es, eine Dichtungsanordnung zwischen bewegten und statischen Teilen vorzuschlagen, die eine Verbesserung strukturmechanischer Eigenschaften wie beispielsweise eine Versteifung von Teilen der Dichtungsanordnung zur Folge hat.

Die erfindungsgemäße Aufgabe wird durch eine Dichtungsanordnung mit den Merkmalen des Anspruchs 1 gelöst.

Erfindungsgemäß wird somit eine Dichtungsanordnung vorgeschlagen, die eine Stützvorrichtung und ein Dichtelement aufweist, wobei die Stützvorrichtung und das Dichtelement zwei getrennt gefertigte und/oder voneinander vorliegende Teile der Dichtungsanordnung sind. Die Dichtungsanordnung ist zwischen einem Rotor als bewegtem Teil und einem Stator und/oder einem Gehäuse als statischem Teil angeordnet. Die Stützvorrichtung erstreckt sich im Wesentlichen senkrecht zur Durchströmungsrichtung in radialer Richtung, weist jedoch eine axiale Kontur in Durchströmungsrichtung auf. Die axiale Kontur erstreckt sich in Umfangsrichtung bzw. über dem Umfang, insbesondere über den gesamten Umfang von 360 Grad, und bewirkt eine versteifende Wirkung der Stützvorrichtung in der Dichtungsanordnung.

Bei allen vorstehenden und folgenden Ausführungen ist der Gebrauch des Ausdrucks "kann sein" bzw. "kann haben" usw. synonym zu "ist vorzugsweise" bzw. "hat vorzugsweise" usw. zu verstehen und soll erfindungsgemäße Ausführungsformen erläutern.

Wann immer hierin Zahlenworte genannt werden, so versteht der Fachmann diese als Angabe einer zahlenmäßig unteren Grenze. Sofern dies zu keinem für den Fachmann erkennbaren Widerspruch führt, liest der Fachmann daher beispielsweise bei der Angabe "ein" oder "einem" stets "wenigstens ein" oder "wenigstens einem" mit. Dieses Verständnis ist ebenso von der vorliegenden Erfindung mit umfasst wie die Auslegung, dass ein Zahlenwort wie beispielsweise "ein" alternativ als "genau ein" gemeint sein kann, wo immer dies für den Fachmann erkennbar technisch möglich ist. Beides ist von der vorliegenden Erfindung umfasst und gilt für alle hierin verwendeten Zahlenworte.

Vorteilhafte Weiterentwicklungen der vorliegenden Erfindung sind jeweils Gegenstand von Unteransprüchen und Ausführungsformen.

Erfindungsgemäße Ausführungsformen können eines oder mehrere der im Folgenden genannten Merkmale aufweisen.

In bestimmten erfindungsgemäßen Ausführungsformen ist die axiale Strömungsmaschine eine Gasturbine, insbesondere eine Fluggasturbine. Eine Fluggasturbine kann als Turbinen-Luftstrahltriebwerk bezeichnet werden. Eine Fluggasturbine weist insbesondere einen Einlauf, einen Verdichter (mit Niederdruckverdichter und Hochdruckverdichter), eine Brennkammer, eine Turbine (mit Niederdruckturbine und Hochdruckturbine)und eine Schubdüse auf.

In manchen erfindungsgemäßen Ausführungsformen ist die Dichtungsanordnung an dem Stator und/oder an dem Gehäuse und/oder an dem Rotor befestigt.

Die Dichtungsanordnung kann in gewissen erfindungsgemäßen Ausführungsformen wieder lösbar an dem Stator, dem Gehäuse oder dem Rotor befestigt sein. Insbesondere kann die Dichtungsanordnung an einem nicht rotierenden Teil befestigt sein. Die Dichtungsanordnung kann in einer Nut befestigt oder fixiert sein, z. B. mittels Klemmung. Die Klemmung kann durch geeignete Sicherheitsvorrichtungen (Sicherungsstift etc.) gegen ein unbeabsichtigtes Lösen im Betrieb gesichert werden. Die Nut kann sich über den gesamten Umfang oder über Segmente des Umfangs erstrecken.

Die Dichtungsanordnung kann in gewissen erfindungsgemäßen Ausführungsformen nicht lösbar mit dem Rotor, dem Stator oder dem Gehäuse verbunden sein. Nicht lösbare Verbindungen können Lötverbindungen, Schweißverbindungen oder Klebeverbindungen sein. Nicht lösbare Verbindungen können Stoffverbindungen sein.

In einigen erfindungsgemäßen Ausführungsformen ist die Dichtungsanordnung zwischen einer Rotorwelle und einer radial innen angeordneten Leitschaufelspitze positioniert. An der Leitschaufelspitze können weitere Halterungen befestigt sein. Die Leitschaufeln können auf einem Leitschaufelkranz (oder Leitschaufelring) angeordnet sein, der mit dem Gehäuse der Strömungsmaschine verbunden ist.

Eine versteifende Wirkung der Stützvorrichtung mittels einer in Umfangsrichtung axialen Kontur der Stützvorrichtung bedeutet in bestimmten erfindungsgemäßen Ausführungsformen, dass die axiale Kontur eine Versteifung der Struktur der Stützvorrichtung bewirkt. Eine axiale Kontur der Stützvorrichtung kann bedeuten, dass die Stützvorrichtung, über den Umfang von 360 Grad betrachtet, Strukturen oder geometrische Merkmale aufweist, die sich in Achsrichtung erstrecken. Diese Strukturen oder geometrischen Merkmale können sich insbesondere im dynamischen Verhalten der Stützvorrichtung versteifend oder stabilisierend auswirken. Beispielsweise können sich Verstärkungen oder Verbreiterungen der Stützvorrichtung in Achsrichtung, z. B. zwei Verstärkungen bei einem Umfangswinkel von 0 Grad und 180 Grad stabilisierend auf das Schwingungsverhalten der Stützvorrichtung auswirken.

Eine Versteifung der Struktur kann eine strukturmechanische Integrität der Stützvorrichtung bewirken. Eine strukturmechanische Integrität ist insbesondere bei dynamischen Triebwerkskomponenten der Strömungsmaschine und dem dynamischen Verhalten des Triebwerks von besonderer Bedeutung.

In manchen erfindungsgemäßen Ausführungsformen ist das Dichtelement ringförmig ausgebildet. Das Dichtelement kann als vollständiger Ring, z. B. gefertigt und montiert aus mehreren Einzelteilen, in die axiale Strömungsmaschine, beispielsweise in Gehäusenuten oder Halterungsringe von Leitschaufelringen, eingebracht werden. Das Dichtelement kann alternativ in Form mehrerer Segmente, sogenannter Dichtelementsegmente, auf dem Umfang eingebracht werden.

Das Dichtelement ist eine Bürstendichtung. Eine Bürstendichtung kann ein Kerndichtelement und ein Gehäuse aufweisen. Weiterhin kann das Kerndichtelement einen Kerndraht, ein Drahtpaket oder ein Faserpaket, sowie ein Klemmrohr umfassen. Das Gehäuse der Bürstendichtung kann einen Deckring, der das Kerndichtelement schützt, und weitere Elemente zum Abdecken und/oder Stabilisieren der Bürstendichtung aufweisen.

Die Drähte des Drahtpakets oder Fasern des Faserpakets können in einigen erfindungsgemäßen Ausführungsformen mechanisch, z. B. formschlüssig, geklemmt werden.

In manchen erfindungsgemäßen Ausführungsformen weist das Drahtpaket metallische Drähte aus einem Kobald-Nickel-Chrom-Wolfram-Werkstoff (z. B. Haynes^{R} 25) auf oder ist aus diesen hergestellt. Die Drähte können exemplarisch einen Durchmesser zwischen 0,05 mm und 0,2 mm aufweisen.

) In gewissen erfindungsgemäßen Ausführungsformen weist das Faserpaket Polymerfasern (z. B. Aramid) auf oder ist aus diesen hergestellt. Die Fasern können exemplarisch einen Durchmesser zwischen 0,01 mm und 0,05 mm aufweisen.

In bestimmten erfindungsgemäßen Ausführungsformen ist die Stützvorrichtung ringförmig ausgestaltet. Die Stützvorrichtung kann als vollständiger Ring, z. B. gefertigt und montiert aus einem Blech oder aus einem anderen dünnwandigen Material, in die axiale Strömungsmaschine, beispielsweise in Gehäusenuten oder Halterungsringe von Leitschaufelringen, eingebracht werden. Die Stützvorrichtung kann alternativ in Form mehrerer Segmente, also segmentiert, auf dem Umfang eingebracht werden.

In einigen erfindungsgemäßen Ausführungsformen ist die Stützvorrichtung in einer Abwicklung wellenförmig ausgestaltet.

Der Begriff "Abwicklung", wie er hierin verwendet wird, bezeichnet in manchen erfindungsgemäßen Ausführungsformen eine Projektion der Stützvorrichtung in einer Betrachtung oder mit Blick von radial innen nach radial außen, z. B. über den gesamten Umfang betrachtet. Die Abwicklung ist die Darstellung dieser Projektion auf eine zweidimensionale Ebene. Ist die Abwicklung beispielsweise wellenförmig, so bedeutet dies, die axiale Kontur der Stützvorrichtung in Umfangsrichtung, also entlang der Umfangsrichtung beispielsweise von 0 Grad bis 360 Grad bei einem vollständigen Umfang, ist, zumindest an dem radial inneren Ende der Stützvorrichtung, dessen Abwicklung dargestellt wird, wellenförmig.

Eine wellenförmig Abwicklung ist in gewissen erfindungsgemäßen Ausführungsformen periodisch (ganzperiodisch, halbperiodisch usw.), sinuswellenförmig, kurzwellig oder in einer anderen wellenförmigen Form. Bei einer ganzperiodischen Wellenform wird eine ganze oder volle Periode über dem Umfang von 360 Grad abgebildet. Anders ausgedrückt entspricht die Wellenlänge bei einer ganzperiodischen Wellenform einer vollständigen Umfangslänge (mathematisch wird eine Umfangslänge U durch die folgende Formel beschrieben: U = 2 * π * r, mit π = 3,14159265359 und r = Radius). Bei einer halbperiodischen Wellenform wird eine halbe Periode über dem Umfang von 360 Grad abgebildet. Bei einer kurzwelligen Wellenform weist die abgewickelte Wellenform mehrere Wellen oder Perioden über dem Umfang von 360 Grad auf.

In bestimmten erfindungsgemäßen Ausführungsformen ist die Stützvorrichtung in einer Abwicklung zackenförmig ausgestaltet. Eine zackenförmige Abwicklung weist mehrere gerade Abschnitte auf, die mit einem oder verschiedenen Winkeln aneinandergereiht sind. Eine zackenförmige Abwicklung kann regelmäßig sein, d. h. die Winkel der aneinandergereihten geraden Abschnitte sind gleich über dem abgewickelten Umfang, oder unregelmäßig.

In einigen erfindungsgemäßen Ausführungsformen weist die Abwicklung wenigstens vier gerade über dem Umfang aneinandergereihte Abschnitte auf.

In manchen erfindungsgemäßen Ausführungsformen ist das Verhältnis der Breite (A) der axialen Kontur zur Breite der Stützvorrichtung (B) zwischen 2 und 10. Die Breite der Stützvorrichtung (B) wird im Folgenden als Strukturbreite bezeichnet. Die Strukturbreite kann in Umfangsrichtung variieren. Wenn beispielsweise die Stützvorrichtung blechförmig ausgestaltet ist, bedeutet eine über dem Umfang variierende Strukturbreite eine unterschiedliche Blechstärke der Stützvorrichtung am inneren radialen Ende (in der Abwicklung wird das innere radiale Ende der Stützvorrichtung zweidimensional dargestellt). Die Strukturbreite ist insbesondere über dem Umfang konstant, zumindest innerhalb von Fertigungsgenauigkeiten der Stützvorrichtung.

Die Breite der axialen Kontur entspricht der axialen Ausdehnung oder Auslenkung der Stützvorrichtung senkrecht zur Umfangsrichtung. Bei einer sinusförmigen Wellenform entspricht die Breite der axialen Kontur der doppelten Amplitude oder der Gesamtauslenkung der Welle senkrecht zur Ausbreitung.

In einem rein exemplarischen Zahlenbeispiel ist in einer gewissen erfindungsgemäßen Ausführungsform die Strukturbreite 3 mm und die Breite der axialen Kontur 21 mm, somit ist das Verhältnis von der Breite der axialen Kontur zur Strukturbreite 7.

In gewissen erfindungsgemäßen Ausführungsformen erstreckt sich die Stützvorrichtung in radialer Richtung über die radiale Länge des Dichtelements hinaus, insbesondere nach radial aussen.

Die Stützvorrichtung ist eine Anstreifvorrichtung. Eine Anstreifvorrichtung in einer Dichtungsanordnung kann dazu eingesetzt werden, um einen abzudichtenden Spalt zu minimieren. Zu diesem Zweck kann die Anstreifvorrichtung eine Anstreiffläche aufweisen, mittels welcher während eines Reibvorgangs sich ein Spalt zwischen einem bewegten und einem statischen Teil ausbildet.

In einigen erfindungsgemäßen Ausführungsformen wird die Anstreiffläche (oder Reibfläche) der Stützvorrichtung mit einer axialen Kontur in Umfangsrichtung gegenüber einer Stützvorrichtung ohne einer axialen Kontur in Umfangsrichtung vergrößert. Die Stützvorrichtung mit einer axialen Kontur in Umfangsrichtung kann beispielsweise bei einer Umdrehung eines Rotors um 360 Grad, gegen den die berührende oder reibende radial innen liegnede Stirnfläche der Stützvorrichtung wirkt oder abdichtet, eine größere Fläche überdecken oder überstreichen als die Stützvorrichtung ohne axialer Kontur.

Im Folgenden wird in einem rein exemplarischen Ausführungsbeispiel eine Anstreiffläche mit und ohne axialer Kontur (oder Ausdehnung in axialer Richtung) der Stützvorrichtung angegeben. Es wird zunächst eine Strukturbreite von 3 mm (Breite der Stützvorrichtung am inneren radialen Ende mit einer konstanten Breite über den Umfang) und eine Breite der axialen Kontur von 21 mm angenommen. Weiterhin wird ein Durchmesser eines Rotors, gegen den die Anstreiffläche abdichtet, von 500 mm angenommen. Damit errechnet sich eine Anstreiffläche (oder Mantelfläche) ohne axialer Kontur von ca. 4.712 mm² (2 * π * 250 mm * 3 mm) und eine Anstreiffläche mit axialer Kontur von ca. 32.987 mm² (2 * π 250 mm * 21 mm). Die Anstreiffläche mit axialer Kontur ist in diesem Ausführungsbeispiel also um den Faktor 7 (Breite der axialen Kontur 21 mm gegenüber der Strukturbreite von 3 mm) größer. Durch die Vergrößerung der Anstreiffläche (Reibfläche) können die Reibkräfte und damit die Temperaturen auf der Anstreiffläche durch die Reibkräfte vorteilhaft sinken.

In manchen erfindungsgemäßen Ausführungsformen ist die Dichtungsanordnung zwischen einem Leitschaufelring und dem Rotor angeordnet. Dieser Bereich innerhalb der axialen Strömungsmaschiene kann als Inner-Air-Seal (IAS) Bereich bezeichnet werden.

In gewissen erfindungsgemäßen Ausführungsformen ist die Dichtungsanordnung zwischen einem Gehäusebereich und dem Rotor angeordnet.

Manche oder alle erfindungsgemäßen Ausführungsformen können einen, mehrere oder alle der oben und/oder im Folgenden genannten Vorteile aufweisen.

Mittels der erfindungsgemäßen Dichtungsanordnung in der axialen Strömungsmaschine, die eine Stützvorrichtung mit einer versteifend wirkenden axialen Kontur (oder einer axialen Ausdehnung in Durchströmungsrichtung) aufweist, kann vorteilhaft eine strukturmechanische Integrität der Stützvorrichtung erzielt werden. Die strukturmechnische Integrität kann beispielsweise durch ein verbessertes Schwingungsverhalten (z. B. geringere Schwingungsamplituden, Verschiebung eines Eigenfrequenzverhaltens aus dem vorgesehenen Betriebsbereich heraus etc.) und/oder durch optimierte Werte zum thermisch-mechanischen Ermüdungsverhalten (TMF - thermal mechanical fatigue) erhöht oder verbessert werden.

Weiterhin kann durch die axiale Kontur der Stützvorrichtung und einer als Anstreifvorrichtung wirkenden Stützvorrichtung die Mantelfläche eines Rotors, gegen den die Anstreifvorrichtung durch die Anstreiffläche wirkt, vorteilhaft vergrößert sein. Dadurch können die resultierenden Temperaturen aufgrund der Reibwirkung der Anstreiffläche vorteilhaft verringert sein.

Mittels der erfindungsgemäßen Dichtungsanordnung, die eine Stützvorrichtung mit einer versteifend wirkenden axialen Kontur aufweist, kann das (mechanische) Widerstandsmoment der Stützvorrichtung aufgrund der versteifend wirkenden axialen Kontur vergrößert sein. Dies kann vorteilhaft eine Gewichtsoptimierung (im Sinne einer Gewichtsverringerung) ermöglichen, indem einzelne Bauteile der Strömungsmaschine kleiner und gewichtssparender ausgelegt werden.

Die vorliegende Erfindung wird im Folgenden anhand der beigefügten Zeichnungen, in welcher identische Bezugszeichen gleiche oder ähnliche Bauteile bezeichnen, exemplarisch erläutert. In den jeweils schematisch vereinfachten Figuren gilt:
- **Fig. 1**: zeigt eine Schnittdarstellung einer erfindungsgemäßen Dichtungsanordnung mit einem Rotor, einem Stator und einer Bürstendichtung; und
- **Fig. 2a,2b**: zeigen zwei Abwicklungen zweier Ausführungsformen von Stützvorrichtungen.

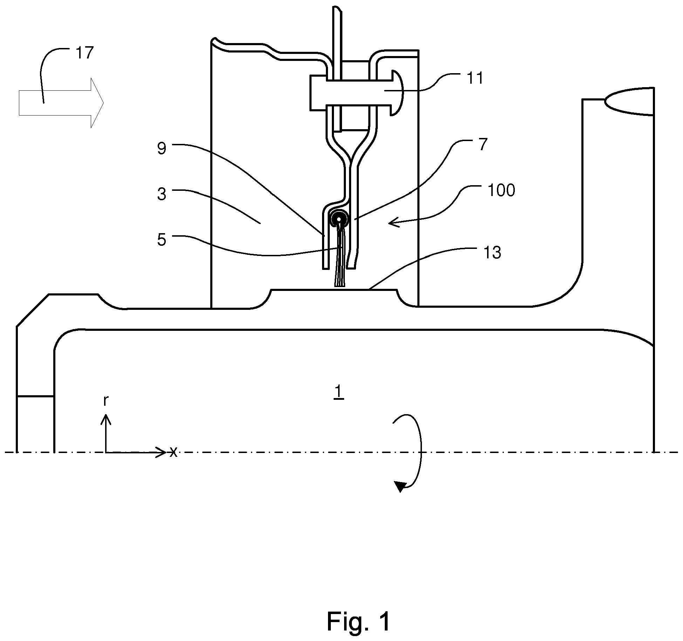

**Fig. 1** zeigt eine Schnittdarstellung einer erfindungsgemäßen Dichtungsanordnung 100 mit einem Rotor 1, einem ringförmige Stator 3 und einer ringförmigen Bürstendichtung 5 als Dichtelement. Die Bürstendichtung 5 ist auf dem Umfang der Strömungsmaschine zwischen einer Stützvorrichtung 7 und einem Halteblech 9 des Stators 3 mittels einer mechanischen Klemmung befestigt oder fixiert. Die Stützvorrichtung 7 erstreckt sich ebenfalls ringförmig über den Umfang. Die Fixierung der Bürstendichtung 5 zwischen dem Halteblech 9 und Stützvorrichtung 7 erfolgt durch ein axiales Fixierelement 11.

Die Bürstendichtung 5 dichtet gegen eine rotierende Dichtfläche 13 ab.

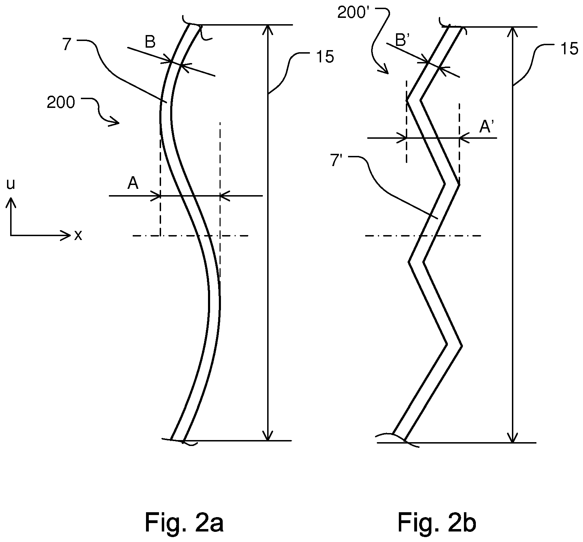

Die Stützvorrichtung 7 kann radial weiter nach innen bis hin zur Dichtfläche 13 ausgebildet sein (in Fig. 1 nicht dargestellt). Wenn die Stützvorrichtung 7 als Anstreichvorrichtung ausgebildet ist, wirkt die radial innere Endfläche der Stützvorrichtung 7 als Anstreiffläche. Die Anstreiffläche kann bei einer axialen Kontur (dies wird in Fig. 1 aufgrund der Schnittdarstellung nicht gezeigt) eine größere Fläche der Rotordichtfläche 13 berühren oder anstreifen, als eine Anstreiffläche, die keine axiale Kontur (Ausdehnung in Achsrichtung x) aufweist. Stützvorrichtungen mit zwei verschiedenen axialen Konturen werden in Fig. 2 dargestellt.

Die Stützvorrichtung 7 kann als sogenannte Backingplate bezeichnet werden.

Die gesamte Anordnung in Fig. 1 kann Teil eines sogenannten IAS-Designs (IAS - Inner-Air-Seal) sein.

Die Durchströmungsrichtung 17 der axialen Strömungsmmaschine verläuft in Pfeilrichtung.

**Fig. 2a** zeigt eine Abwicklung 200 einer Stützvorrichtung 7 in Umfangsrichtung u über eine Umfangslänge 15 von 360 Grad. In anderen Ausführungsformen kann die Abwicklung kleinere Winkel als 360 Grad aufweisen, wobei die Stützvorrichtung 7 dann über den Umfang u segmentiert ist.

Die axiale Kontur weist in Fig. 2a eine Breite der axialen Kontur A von rein exemplarisch für dieses Ausführungsbeispiel von ca. 21 mm aus. Die Strukturbreite B (in Fig. 2a ist dies die Blickrichtung von radial innen nach radial außen) der Stützvorrichtung 7 ist diesem rein exemplarischen Ausführungsbeispiel ca. 3 mm. Damit errechnet sich ein Verhältnis der Breite der axialen Kontur A zu Strukturbreite B in diesem Ausführungsbeispiel von 7.

Die Form der Abwicklung der Stützvorrichtung 7 in Umfangsrichtung u ist gleichmäßig wellenförmig und ganzperiodisch (die Welle weist eine Periode über der Umfangslänge 15 von 360 Grad auf).

Die Breite der axialen Kontur A entspricht bei einer Ausführung der Stützvorrichtung 7 als Anstreifvorrichtung der Kontaktbreite zum Reibpartner der Rotordichtfläche 13 (s. Fig. 1).

**Fig. 2b** zeigt eine weitere Abwicklung 200' einer Stützvorrichtung 7' in Umfangsrichtung u über eine Umfangslänge 15 von 360 Grad. Die Diskussion zur Breite der axialen Kontur A' sowie zur Strukturbreite B' gilt analog zur Fig. 2a.

Die Form der Abwicklung der Stützvorrichtung 7 in Umfangsrichtung u ist zackenförmig mit vier jeweils geraden Abschnitten der Stützvorrichtung 7.

**Bezugszeichenliste**

| **Bezugszeichen** | **Beschreibung** |
|---|---|
| 100 | Dichtungsanordnung |
| 200, 200' | Abwicklung einer Stützvorrichtung |
| r | Radialrichtung |
| x | Achsrichtung |
| u | Umfangsrichtung |
| A, A' | Breite der axialen Kontur |
| B, B' | Strukturbreite; Breite der Stützvorrichtung |
| 1 | Rotor |
| 3 | Stator |
| 5 | Bürstendichtung |
| 7, 7' | Stützvorrichtung |
| 9 | Halteblech |
| 11 | Fixierelement |
| 13 | Rotordichtfläche |
| 15 | Umfangslänge |
| 17 | Durchströmungsrichtung |

## Patentansprüche

1. Dichtungsanordnung (100) für eine Strömungsmaschine zwischen einerseits einem Rotor (1) und andererseits einem Stator (3) und/oder einem Gehäuse, mit einer Stützvorrichtung (7, 7') und einem Dichtelement, das eine Bürstendichtung (5) ist, wobei die Stützvorrichtung (7, 7') sich im Wesentlichen in radialer Richtung (r) erstreckt, wobei
die Stützvorrichtung (7, 7') der Strömungsmaschine eine Anstreifvorrichtung ist und eine axiale Kontur aufweist, die eine versteifende Wirkung der Stützvorrichtung (7, 7') bewirkt und sich in Achsrichtung erstreckende Strukturen oder geometrische Merkmale aufweist,
**dadurch gekennzeichnet, dass**
die axiale Kontur zumindest an radial inneren Ende der Stützvorrichtung (7, 7') angeordnet ist, wobei die Stützvorrichtung (7, 7') in einer Abwicklung (200, 200') und in Umfangsrichtung (u) wellenförmig oder zackenförmig ist.

2. Dichtungsanordnung (100) nach Anspruch 1, wobei die Stützvorrichtung (7, 7') und/oder das Dichtelement ringförmig oder in Umfangsrichtung (u) segmentiert ist.

3. Dichtungsanordnung (100) nach Anspruch 1, wobei das Verhältnis der Breite (A, A') der axialen Kontur zur Breite der Stützvorrichtung (B, B') zwischen 2 und 10 ist.

4. Dichtungsanordnung (100) nach einem der vorangegangenen Ansprüche, wobei sich die Stützvorrichtung (7, 7') in radialer Richtung (r) über die radiale Länge des Dichtelements hinaus erstreckt.

5. Dichtungsanordnung (100) nach einem der vorangegangenen Ansprüche, wobei die Dichtungsanordnung (100) zwischen einem Leitschaufelring und dem Rotor (1) angeordnet ist.

6. Dichtungsanordnung (100) nach einem der vorangegangenen Ansprüche, wobei die Dichtungsanordnung (100) zwischen einem Gehäusebereich und einem Rotor (1) angeordnet ist.

## Claims

1. A sealing arrangement (100) for a turbomachine between, on the one hand, a rotor (1), and, on the other hand, a stator (3) and/or a housing, the sealing arrangement comprising a support device (7, 7') and a sealing element that is a brush seal (5), wherein
the support device (7, 7') extends substantially in a radial direction (r), wherein the support device (7, 7') of the turbomachine is a brushing device and has an axial contour that brings about a stiffening effect for the support device (7, 7') and has structures or geometric features that extend in an axial direction,
**characterized in that**
the axial contour is arranged at least at the radially inner end of the support device (7,7'), wherein the support device (7, 7') has a wavy or zigzag shape in a developed view (200, 200') and in a circumferential direction (u).

2. The sealing arrangement (100) according to claim 1, wherein the support device (7, 7') and/or the sealing element is/are ring-shaped or is/are segmented in the circumferential direction (u).

3. The sealing arrangement (100) according to claim 1, wherein the ratio of the width (A, A') of the axial contour to the width of the support device (B, B') is between 2 and 10.

4. The sealing arrangement (100) according to any of the preceding claims, wherein the support device (7, 7') extends in the radial direction (r) beyond the radial length of the sealing element.

5. The sealing arrangement (100) according to any of the preceding claims, wherein the sealing arrangement (100) is arranged between a guide vane ring and the rotor (1).

6. The sealing arrangement (100) according to any of the preceding claims, wherein the sealing arrangement (100) is arranged between a housing region and a rotor (1).

## Revendications

1. Agencement d'étanchéité (100) pour une turbomachine entre, d'une part, un rotor (1) et, d'autre part, un stator (3) et/ou un boîtier, comprenant un dispositif de support (7, 7') et un élément d'étanchéité, qui est un joint étanche à balais (5), dans lequel le dispositif de support (7, 7') s'étend sensiblement dans la direction radiale (r), dans lequel :
le dispositif de support (7, 7') de la turbomachine est un dispositif à effleurement et présente un contour axial qui entraîne un effet raidisseur du dispositif de support (7, 7') et présente des structures ou des caractéristiques géométriques s'étendant dans la direction axiale,
**caractérisé en ce que :**
le contour axial est agencé au moins à l'extrémité radialement interne du dispositif de support (7, 7'), dans lequel le dispositif de support (7, 7') est de forme ondulée ou dentelée dans un développement (200, 200') et dans la direction circonférentielle (u).

2. Agencement d'étanchéité (100) selon la revendication 1, dans lequel le dispositif de support (7, 7') et/ou l'élément d'étanchéité est ou sont annulaires ou segmentés dans la direction circonférentielle (u).

3. Agencement d'étanchéité (100) selon la revendication 1, dans lequel le rapport de la largeur (A, A') du contour axial à la largeur du dispositif de support (B, B') se situe entre 2 et 10.

4. Agencement d'étanchéité (100) selon l'une quelconque des revendications précédentes, dans lequel le dispositif de support (7, 7') s'étend dans la direction radiale (r) sur la longueur radiale de l'élément d'étanchéité.

5. Agencement d'étanchéité (100) selon l'une quelconque des revendications précédentes, dans lequel l'agencement d'étanchéité (100) est agencé entre une couronne d'aubes directrices et le rotor (1).

6. Agencement d'étanchéité (100) selon l'une quelconque des revendications précédentes, dans lequel l'agencement d'étanchéité (100) est agencé entre une zone de boîtier et un rotor (1).
